# FASCICULE DE BREVET EUROPEEN

(11) **EP 1 048 089 B1**
(45) Date de publication et mention de la délivrance du brevet: **03.04.2002**
(21) Numéro de dépôt: 98955446.4
(22) Date de dépôt: 14.10.1998
(51) Int. Cl.: H01M 2/16, B32B 17/10

(54) **SEPARATEUR ABSORBANT RENFORCE EN FIBRES DE VERRE**
MIT GLASFASERN VERSTÄRKTER, SAUGFÄHIGER SEPARATOR
GLASS FIBRE- REINFORCED ABSORBING SEPARATOR

(30) Priorité: 15.10.1997 LU 90149
(43) Date de publication de la demande: 02.11.2000
(73) Titulaire: Amer-Sil S.A., 8287 Kehlen (LU)
(72) Inventeur: DE M. FERREIRA, Antonio, L., L-1940 Luxembourg (LU)
(74) Mandataire: Kihn, Pierre Emile Joseph
(86) Numéro de dépôt international: EP9806500
(87) Numéro de publication internationale: WO9919922

(56) Documents cités:
- EP-A- 0 507 090
- WO-A-92/22705
- US-A- 4 262 068
- PATENT ABSTRACTS OF JAPAN vol. 008, no. 013 (E-222), 20 janvier 1984 & JP 58 176866 A (NIHON GLASS SENI KK), 17 octobre 1983
- PATENT ABSTRACTS OF JAPAN vol. 012, no. 407 (E-675), 27 octobre 1988 & JP 63 148535 A (MATSUSHITA ELECTRIC IND CO LTD), 21 juin 1988

## Description

La présente invention concerne des séparateurs absorbants, renforcés en fibres pour des batteries dont des accumulateurs au plomb-acide régulés par une vanne.

Les accumulateurs électriques au plomb-acide sont utilisés pour emmagasiner de l'énergie électrique sous forme chimique.

Ce type d'accumulateur peut être chargé et déchargé plusieurs fois, certains accumulateurs pouvant livrer plusieurs centaines ou même milliers de cycles de charge - décharge avant que la quantité d'énergie électrique fournie lors de la décharge ne soit trop basse. Normalement, ce seuil de performance électrique se situe à 80% de la capacité nominale de l'accumulateur.

L'entretien d'un accumulateur électrique au plomb-acide classique consiste à remplacer l'eau qui est perdue par électrolyse et évaporation notamment pendant le cycle de recharge.

Pour éliminer cet entretien, on a développé l'accumulateur régulé par une vanne qui est aussi connu sous le nom d'accumulateur à recombinaison des gaz. Ce type d'accumulateur réussit à réduire considérablement les pertes d'eau, ceci grâce à la recombinaison de l'oxygène qui se fait dans l'accumulateur vers la fin du cycle de recharge.

L'oxygène est formé vers la fin de la recharge sur les plaques positives par électrolyse de l'eau contenue dans l'électrolyte. Ce gaz remplit l'accumulateur et migre vers les plaques négatives. L'oxygène est réduit sur la surface de celles-ci et est ensuite incorporé dans l'électrolyte par une série de réactions électrochimiques.

La réduction de l'oxygène est possible parce que l'accumulateur est muni d'une vanne qui empêche l'oxygène de s'échapper de l'accumulateur et qui maintient une pression légèrement supérieure à la pression atmosphérique à l'intérieur de l'accumulateur. Cette surpression à l'intérieur de l'accumulateur empêche les gaz atmosphériques d'entrer dans l'accumulateur.

L'établissement de ce recyclage interne de l'oxygène n'est possible que si l'électrolyte est immobilisé et que si les gaz trouvent des espaces vides par où ils peuvent circuler. Les deux moyens actuels d'immobilisation de l'électrolyte sont :
- la gélification de l'électrolyte avec de la silice,
- l'utilisation de séparateurs absorbants qui retiennent l'électrolyte.

Les accumulateurs régulés par une vanne comprennent des séparateurs flexibles et poreux qui sont placés entre des plaques de polarité opposée. Les séparateurs absorbent et retiennent l'électrolyte liquide acide afin que substantiellement tout l'électrolyte soit absorbé dans les pores des séparateurs et que seulement un film très mince d'électrolyte soit présent sur les plaques des accumulateurs. Les séparateurs retiennent l'électrolyte à proximité des plaques indépendamment de la position de l'accumulateur.

Le taux de saturation des pores du séparateur absorbant par l'électrolyte ne doit pas excéder 95% puisqu'il faut des espaces libres pour que l'oxygène puisse traverser le séparateur en allant des plaques positives où il est formé vers les plaques négatives où il est consommé par réduction et réincorporé dans l'électrolyte par une série de réactions électrochimiques.

Les séparateurs absorbants jouent un rôle très important dans le recyclage d'oxygène puisqu'en immobilisant l'électrolyte dans leurs pores, ils permettent l'accès de l'oxygène aux surfaces des plaques négatives où ce gaz est réduit par des réactions électrochimiques.

Traditionnellement, le séparateur absorbant est fait à base de micro fibres de verre ayant une grande résistance à l'oxydation. Les micro fibres de verre sont rapidement et complètement imbibées par l'électrolyte (acide sulfurique) lors du remplissage de la batterie.

Différents mélanges de fibres ont été utilisés dans le passé comme p.ex. des mélanges de fibres de verre grossières et de fibres de verre fines avec ou sans fibres organiques. Les fibres sont utilisées en de telles proportions qu'elles retiennent une quantité suffisante d'électrolytes. Ainsi, le brevet US 4,465,748 décrit des séparateurs en fibres de verre comprenant entre 5 et 35 % en poids de fibres de verre de moins de 1 micron de diamètre, le restant des fibres ayant des diamètres supérieurs.

Les propriétés physiques et mécaniques des séparateurs fibreux absorbants à micro fibres de verre dépendent largement du contenu de micro fibres fines et aussi du procédé de déposition de ces fibres.

Une des propriétés souhaitables pour ce type de séparateur est la possibilité de lé souder et permettre la formation de poches pour envelopper les plaques. Le soudage des séparateurs est possible grâce à l'utilisation de fibres synthétiques mélangées à des micro fibres de verre. En général entre 5% et 40% de telles fibres sont utilisées, ces fibres synthétiques pouvant être fondues de façon à réunir les-séparateurs. Une autre technique afin de réunir deux séparateurs consiste à les comprimer à certains endroits jusqu'à ce qu'ils soient réunis. Ces séparateurs contiennent entre 5% et 40% en poids de fibres synthétiques qui peuvent fusionner sous l'action de la chaleur ou qui peuvent se déformer pendant la compression.

Cette technique est connue de la demande de brevet français FR 2677672.

Le but de la présente invention est de proposer un séparateur pour batteries en micro fibres de verre ayant des propriétés mécaniques supérieures aux séparateurs traditionnels pour batteries en micro fibres de verre.

A cet effet, l'invention propose un séparateur absorbant pour accumulateurs au plomb-acide régulés par une vanne, caractérisé en ce qu'il comprend une première couche. une deuxième couche ainsi qu'une bande en résine synthétique intercalée entre la première et la deuxième couche.

Grâce à la bande en résine synthétique qui recouvre soit entièrement une surface de la première couche soit seulement une partie d'une surface de la première couche, la stabilité du séparateur est augmentée. Un tel séparateur absorbant présente une résistance aux forces de traction plus élevée que celle des séparateurs monocouches traditionnels en fibres de verre avec la même composition de fibres. On a constaté que la résistance à la rupture due à la force de traction est augmentée considérablement. Pour des compositions identiques en micro fibres, on a mesuré que la résistance à la rupture peut être triplée et passe de 0,5 kN/m à 1,5 kN/m. De plus, la bande en résine synthétique permet d'obtenir une élongation de 4% au lieu de 1% pour des séparateurs semblables ne comprenant pas cette bande. On peut donc utiliser des séparateurs fabriqués en un matériau relativement fragile pour des applications dans lesquelles une résistance à la rupture par traction est requise telles que dans des machines automatisées enveloppant les électrodes d'accumulateurs.

La résine synthétique est avantageusement une résine thermodurcissable. Suite au séchage du séparateur à une température de près de 100°C, la résine perd de l'eau en formant un film plastique très résistant capable de souder ensemble les couches du séparateur. En outre, cette résine permet de souder deux séparateurs distincts, superposés ensemble pour former des poches dans lesquelles peuvent être insérées des électrodes. Cette soudure peut se faire p.ex. par des moyens mécaniques, par chauffage, etc.

Selon un mode de réalisation avantageux, la bande en résine comprend une résine acrylique et de préférence de l'acrylate de butyle.

La bande en résine synthétique comprend de préférence des fibres des micro fibres de verre imbibées de résine.

L'épaisseur de cette bande en résine peut varier entre 0.01 mm et 1 mm. Elle est de préférence comprise entre 0.05 mm et 0.15 mm.

Les bandes en résine synthétique ont une largeur qui est choisie en fonction de la largeur du séparateur. En général, la bande est d'une largeur relativement faible comparée à la largeur totale du séparateur. Elle est normalement comprise entre 1 et 20 mm et de préférence entre 3 mm et 10 mm.

La bande peut être soit en un seul morceau soit subdivisée en longueur pour former deux ou plusieurs bandes. En général, la largeur d'une bande en résine est comprise entre 1 mm et 20 mm et de préférence entre 3 mm et 10 mm.

Les couches en micro fibres de verre peuvent être identiques ou différentes. Les couches du séparateur comprennent des fibres de verre ayant un diamètre moyen compris entre 0,2 µm et 13 µm. Une composition typique pour chaque couche est la suivante : 0% - 60% de fibres de verre ayant un diamètre moyen inférieur à 1 µm (0,2 µm à 0,8 µm), 0%-70% de fibres de verre ayant un diamètre moyen compris entre 1 µm et 10 µm (2 µm à 4 µm), et 5-10% de fibres de verre ayant un diamètre compris entre 10 µm et 13 µm.

La composition de chaque couche peut varier selon les caractéristiques souhaitées du séparateur. Les deux couches peuvent soit être identiques soit être différentes.

Selon un autre mode de réalisation préféré, la première couche du séparateur comprend plus de 50% de fibres de verre d'un diamètre moyen inférieur à 1 micron.

Les fibres de la première couche ont, de préférence, un diamètre moyen supérieur à 0,4 microns.

Avantageusement, l'épaisseur de la première couche est comprise entre 20 et 50% de l'épaisseur totale du séparateur. Le rapport pondéral entre les fibres fines et les fibres grossières peut varier entre 20 et 50% du poids total du séparateur.

La deuxième couche comprend, de préférence, plus de 50% de fibres de verre d'un diamètre moyen supérieur à 1 micron. De manière préférée, la deuxième couche du séparateur comprend plus de 90% de fibres de verre d'un diamètre moyen supérieur à 1 micron.

Dans une réalisation préférée de l'invention, ladite deuxième couche comprend en outre des fibres de verre ayant un diamètre moyen > 5 microns.

Selon un autre aspect de la présente invention, on propose également un procédé de fabrication d'un séparateur absorbant pour des batteries dont des accumulateurs au plomb-acide régulés par une vanne, dans lequel on dépose sur un support, une couche inférieure, on répartit sur cette couche une bande en résine synthétique et on dépose ensuite une couche supérieure sur ladite bande en résine et dans lequel on comprime les couches de façon à ce qu'elles rëstent liées les unes aux autres.

Selon un mode de réalisation avantageux, ladite couche inférieure comprend essentiellement des fibres d'un diamètre moyen supérieur à 1 micron et ladite couche supérieure comprend essentiellement des fibres d'un diamètre moyen inférieur à 1 micron.

Grâce à la plus grande porosité de la couche comprenant les fibres ayant un diamètre moyen supérieur à 1 micron, l'accrochage de la bande en résine est meilleur.

On dépose de préférence successivement les fibres mélangées à de l'eau sur un tapis perméable à l'eau. Après avoir déposé la deuxième couche de fibres, le séparateur est compressé de façon à lier les couches superposées et est ensuite séché.

D'autres caractéristiques de l'invention sont décrites, à titre non limitatif, dans les exemples et en relation avec les figures dans lesquelles :
la Fig. 1 montre un séparateur comprenant deux bandes en résine synthétique,
la Fig. 2 est un schéma montrant la fabrication d'un séparateur multicouches renforcée par le dépôt de coulis en résine acrylique.

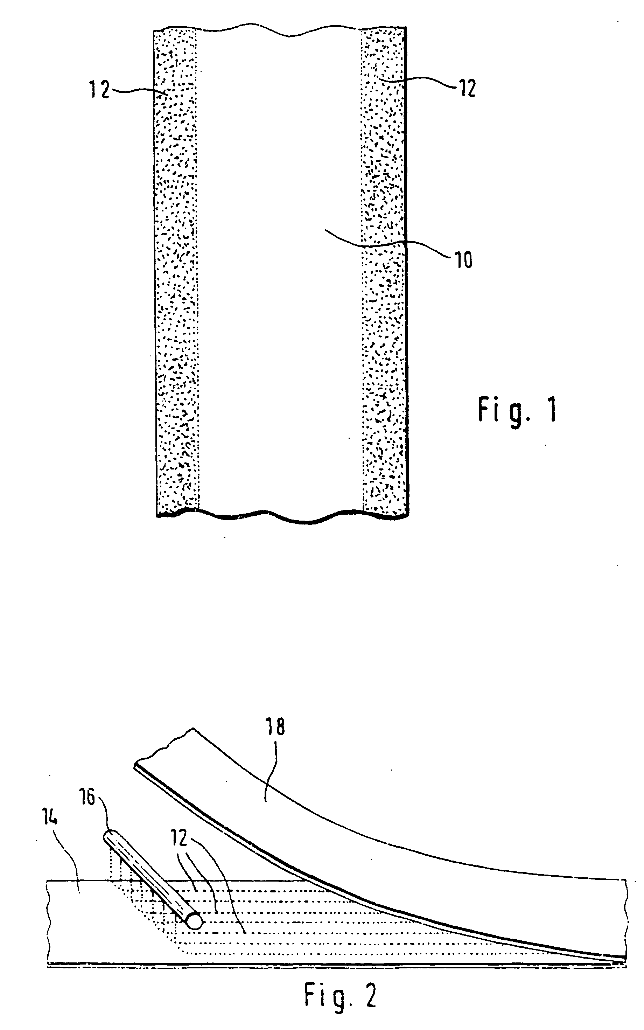

La Fig. 1 montre un séparateur multicouches 10 comprenant une première couche comprenant essentiellement des fibres d'un diamètre moyen inférieur à 1 micron, une deuxième couche comprenant essentiellement des fibres d'un diamètre moyen supérieur à 1 micron ainsi que deux bandes 12 en résine synthétique intercalée entre la première et la deuxième couche. Dans le cas représenté sur la Fig. 1, les bandes 12 sont placés sur les côtés du séparateur 10 de façon à renforcer les bords latéraux de celui-ci. Les bandes 12 ont chacune une épaisseur d'environ 0.1 mm et une largeur comprise entre 3 et 10 mm. Elles sont en résine acrylique et renforcent le séparateur 10.

La Fig. 2 montre schématiquement la fabrication d'un séparateur multicouches.

On dépose sur un support (non représenté) une couche inférieure 14 comprenant essentiellement des fibres d'un diamètre moyen compris entre 0,2 µm et 13 µm. Ensuite, au moins une bande 12 en résine synthétique est déposée à l'aide d'un distributeur 16 sous forme de liquide visqueux sur une partie de ladite première couche 14, puis une deuxième couche 18 comprenant essentiellement des fibres d'un diamètre moyen compris entre 0,2 µm et 13 µm est déposée sur la couche inférieure 14 et sur la bande en résine 12.

Les fibres sont mélangées à de l'eau puis déposées sur un tapis perméable à l'eau. Après le dépôt des deux couches et de la bande, le séparateur est comprimé à l'aide d'un rouleau (non représenté) pour chasser l'excédent d'eau et réunir les couches et la ou les bande(s). Le fait de renforcer le séparateur par des bandes en résine permet d'augmenter encore la résistance à la rupture par traction. Celle-ci passe d'environ 0,5 kN/m à 1,5 kN/m.

L'élongation aussi est fortement augmentée, elle passe de 1% à 4% environ.

Les valeurs de la résistance à la rupture (tensile strength) ont été déterminées selon des méthodes bien connues dans l'industrie productrice de séparateurs et de papier. Les présentes mesures ont été effectuées selon des tests élaborés par le BCI (Battery Council International) REF. Tappi.T495. En résumé, ce test prévoit de placer une bande de 25 mm * 150 mm entre deux mâchoires espacées de 102 mm (4 pouces). La bande est étirée pendant le test à une vitesse de 25 +/- 5 mm/min. La résistance à la rupture est mesurée en Newton et le point de rupture ainsi que l'élongation à la rupture sont également déterminés.

Un échantillon testé de séparateur sans résine a présenté une résistance à la rupture de 5 N, tandis qu'un échantillon testé de séparateur comprenant une bande de résine selon la présente invention a présenté une résistance à la rupture de 37,5 N. Comme l'échantillon en question avait une largeur de 25 mm, ceci équivaut à une résistance à la rupture de 1,5 kN/m.

## Revendications

1. Séparateur absorbant pour accumulateurs au plomb-acide régulés par une vanne, **caractérisé en ce qu'**il comprend une première couche en fibres de verre, une deuxième couche en fibres de verre ainsi qu'une bande en résine synthétique intercalée entre la première et la deuxième couche.

2. Séparateur selon la revendication 1, **caractérisé en ce que** la bande en résine comprend de l'acrylate de butyle.

3. Séparateur selon la revendication 1 ou 2, **caractérisé en ce que** la bande comprend des fibres de verre imbibées de résine.

4. Séparateur selon l'une quelconque des revendications précédentes, **caractérisé en ce que** l'épaisseur de la bande en résine est comprise entre 0.01 mm et 1 mm et de préférence entre 0.05 mm et 0.15 mm.

5. Séparateur selon l'une quelconque des revendications précédentes, **caractérisé en ce que** la largeur de la bande en résine est comprise entre 1 et 20 mm et de préférence entre 3 mm et 10 mm.

6. Séparateur selon l'une quelconque des revendications précédentes, **caractérisé en ce que** la première couche comprend plus de 50% de fibres de verre d'un diamètre moyen inférieur à 1 micron.

7. Séparateur selon l'une quelconque des revendications précédentes, **caractérisé en ce que** les fibres de verre de la première couche ont un diamètre moyen supérieur à 0,4 microns.

8. Séparateur selon l'une quelconque des revendications précédentes, **caractérisé en ce que** l'épaisseur de la première couche est comprise entre 20 et 50% de l'épaisseur totale du séparateur.

9. Séparateur selon l'une quelconque des revendications précédentes, **caractérisé en ce que** la deuxième couche comprend plus de 50% de fibres de verre d'un diamètre moyen supérieur à 1 micron.

10. Séparateur selon l'une quelconque des revendications précédentes, **caractérisé en ce que** ladite deuxième couche comprend en outre des fibres de verre ayant un diamètre moyen > 5 microns.

11. Procédé de fabrication d'un séparateur selon l'une quelconque des revendications précédentes, **caractérisé en ce que** l'on dépose sur un support une couche inférieure comprenant essentiellement des fibres, l'on répartit sur ladite première couche au moins une bande en résine synthétique et l'on dépose ensuite une couche supérieure comprenant essentiellement des fibres sur ladite bande en résine et **en ce que** l'on comprime les couches de façon à ce qu'elles restent liées les unes aux autres.

12. Procédé de fabrication d'un séparateur selon la revendication 11, **caractérisé en ce que** la bande en résine synthétique est déposée sous forme d'un liquide visqueux étalé sur la première couche en fibre.

13. Procédé de fabrication d'un séparateur selon l'une quelconque des revendications 11 ou 12, **caractérisé en ce que** les fibres sont mélangées à de l'eau et déposées sur un tapis perméable à l'eau.

## Claims

1. Absorbent separator for lead-acid accumulators regulated by a valve, **characterised in that** it comprises a first layer of glass fibres, a second layer of glass fibres and a band of synthetic resin intercalated between the first and second layers.

2. Separator according to Claim 1, **characterised in that** the band of resin comprises butyl acrylate.

3. Separator according to Claim 1 or 2, **characterised in that** the band comprises glass fibres saturated with resin.

4. Separator according to any one of the preceding claims, **characterised in that** the thickness of the band of resin lies between 0.01 mm and 1 mm and preferably between 0.05 mm and 0.15 mm.

5. Separator according to any one of the preceding claims, **characterised in that** the width of the band of resin lies between 1 and 20 mm and preferably between 3 mm and 10 mm.

6. Separator according to any one of the preceding claims, **characterised in that** the first layer comprises more than 50 per cent of glass fibres with a mean diameter of less than 1 micron.

7. Separator according to any one of the preceding claims, **characterised in that** the glass fibres of the first layer have a mean diameter greater than 0.4 microns.

8. Separator according to any one of the preceding claims, **characterised in that** the thickness of the first layer lies between 20 and 50 per cent of the total thickness of the separator.

9. Separator according to any one of the preceding claims, **characterised in that** the second layer comprises more than 50 per cent of glass fibres with a mean diameter greater than 1 micron.

10. Separator according to any one of the preceding claims, **characterised in that** the second layer also comprises glass fibres having a mean diameter > 5 microns.

11. Method of manufacturing a separator according to any one of the preceding claims, **characterised in that** a lower layer essentially comprising fibres is deposited on a support, at least one band of synthetic resin is deposited on the said first layer, and an upper layer essentially comprising fibres is then deposited on the said band of resin and **in that** the layers are compressed so that they remain bound to each other.

12. Method of manufacturing a separator according to Claim 11, **characterised in that** the band of synthetic resin is deposited in the form of a viscous liquid spread over the first layer of fibres.

13. Method of manufacturing a separator according to either of Claims 11 or 12, **characterised in that** the fibres are mixed with water and deposited on a mat permeable to water.

## Patentansprüche

1. Absorbierender Scheider für mit Schieber regulierte Blei-Säure-Akkumulatoren, **dadurch gekennzeichnet, dass** er aus einer ersten Glasfaserschicht, aus einer zweiten Glasfaserschicht und aus einem zwischen der ersten und der zweiten Schicht gelagerten Kunstharzstreifen besteht.

2. Scheider nach Anspruch 1, **dadurch gekennzeichnet, dass** der Harzstreifen Butylacrylat enthält.

3. Scheider nach einem der Ansprüche 1 oder 2, **dadurch gekennzeichnet, dass** der Streifen harzgetränkte Glasfasern enthält.

4. Scheider nach einem der vorstehenden Ansprüche, **dadurch gekennzeichnet, dass** die Dicke des Harzstreifens zwischen 0.01 mm und 1 mm, bevorzugt zwischen 0.05 mm und 0.15 mm liegt.

5. Scheider nach einem der vorstehenden Ansprüche, **dadurch gekennzeichnet, dass** die Breite des Harzstreifens zwischen 1 und 20 mm, bevorzugt zwischen 3 mm und 10 mm beträgt

6. Scheider nach einem der vorstehenden Ansprüche, **dadurch gekennzeichnet, dass** die erste Schicht über 50 % Glasfasern, mit einem mittleren Durchmesser kleiner als 1 Mikron enthält.

7. Scheider nach einem der vorstehenden Ansprüche, **dadurch gekennzeichnet, dass** die Glasfasern der ersten Schicht einen mittleren Durchmesser größer als 0.4 Mikrons erweisen.

8. Scheider nach einem der vorstehenden Ansprüche, **dadurch gekennzeichnet, dass** die Dicke der ersten Schicht zwischen 20 und 50 % der Gesamtdicke des Scheiders beträgt.

9. Scheider nach einem der vorstehenden Ansprüche, **dadurch gekennzeichnet, dass** die zweite Schicht über 50 % Glasfasern, mit einem mittleren Durchmesser größer als 1 Mikron enthält.

10. Scheider nach einem der vorstehenden Ansprüche, **dadurch gekennzeichnet, dass** die genannte zweite Schicht außerdem Glasfasern mit einem mittleren Durchmesser > 5 Mikrons enthält.

11. Verfahren zur Herstellung eines Scheiders nach einem der vorstehenden Ansprüche, **dadurch gekennzeichnet, dass** man auf einen Träger, eine wesentlich aus Fasern bestehende untere Schicht ablegt, man auf diese Schicht mindestens einen Kunstharzstreifen verteilt, man dann auf diesen Harzstreifen eine wesentlich aus Fasern bestehende obere Schicht ablegt, und dass man dann diese Schichten so verdichtet, dass sie miteinander verbunden bleiben.

12. Verfahren zur Herstellung eines Scheiders nach Anspruch 11, **dadurch gekennzeichnet, dass** der Kunstharzstreifen in Form einer auf die erste Fasernschicht verteilten dickflüssigen Flüssigkeit gelegt wird.

13. Verfahren zur Herstellung eines Scheiders nach einem der Ansprüche 11 oder 12, **dadurch gekennzeichnet, dass** die Fasern mit Wasser gemischt und auf eine wasserdurchlässige Matte gelegt werden.
